(19) Europäisches Patentamt

European Patent Office

Office européen des brevets

(11) **EP 1 631 029 A1**

(12) **EUROPEAN PATENT APPLICATION**
published in accordance with Art. 158(3) EPC

(43) Date of publication:
**01.03.2006 Bulletin 2006/09**

(51) Int Cl.:
*H04L 25/49* (1974.07)   *H04L 7/00* (1968.09)

(21) Application number: **04709696.1**

(22) Date of filing: **10.02.2004**

(86) International application number:
**PCT/JP2004/001375**

(87) International publication number:
**WO 2004/110005 (16.12.2004 Gazette 2004/51)**

(84) Designated Contracting States:
**DE FR GB IT**

(30) Priority: **02.06.2003 JP 2003156682**

(71) Applicant: **MATSUSHITA ELECTRIC INDUSTRIAL CO., LTD.**
**Kadoma-shi, Osaka 571-8501 (JP)**

(72) Inventors:
• **KAWADA, Hirotsugu**
  **Osaka-shi,**
  **Osaka 543-0043 (JP)**
• **SAITO, Yoshiyuki**
  **Katano-shi,**
  **Osaka 576-0053 (JP)**
• **SHIBATA, Osamu**
  **Hyogo 669-1133 (JP)**
• **SUENAGA, Hiroshi**
  **Osaka-shi,**
  **Osaka 532-0022 (JP)**

• **SAKAI, Takahisa**
  **Yokohama-shi,**
  **Kanagawa 224-0003 (JP)**
• **UMEI, Toshitomo**
  **Settsu-shi,**
  **Osaka 566-0033 (JP)**
• **AKITA, Takashi**
  **Osaka-shi,**
  **Osaka 532-0022 (JP)**
• **MIZUGUCHI, Yuji**
  **Hirakara-shi,**
  **Osaka 573-0162 (JP)**
• **KATTA, Noboru**
  **Kawasaki-shi,**
  **Kanagawa 216-0005 (JP)**

(74) Representative: **Pautex Schneider, Nicole Véronique et al**
**Novagraaf International SA**
**25, Avenue du Pailly**
**1220 Les Avanchets - Geneva (CH)**

(54) **DATA TRANSMISSION DEVICE AND DATA TRANSMISSION METHOD**

(57)   A signal receiver (11) receives an analog signal via a twisted pair cable (31). An A/D converter (12) converts the analog signal to a digital signal. A phase detection unit (14) detects the phase of the digital signal, and generates a reception timing signal. A transmission timing generation unit (15) controls, based on the reception timing signal, timing for a transmission processing unit (16) to output the digital signal such that the reception signal (point A) and a transmission signal (point D) are different in phase by a predetermined degree. The transmission processing unit (16) outputs, in accordance with the timing, a digital signal obtained by performing mapping on data inputted from a connection device (20). A D/A converter (17) converts the digital signal to an analog signal. A signal transmitter (18) transmits the analog signal via a twisted pair cable (32).

F I G. 1

EP 1 631 029 A1

**Description**

TECHNICAL FIELD

The present invention relates to a data transmission apparatus and a data transmission method, and more particularly, it relates to a data transmission apparatus, which performs telecommunications with another apparatus via different transmission paths for transmission and reception, and a data transmission method executed by the same apparatus.

BACKGROUND ART

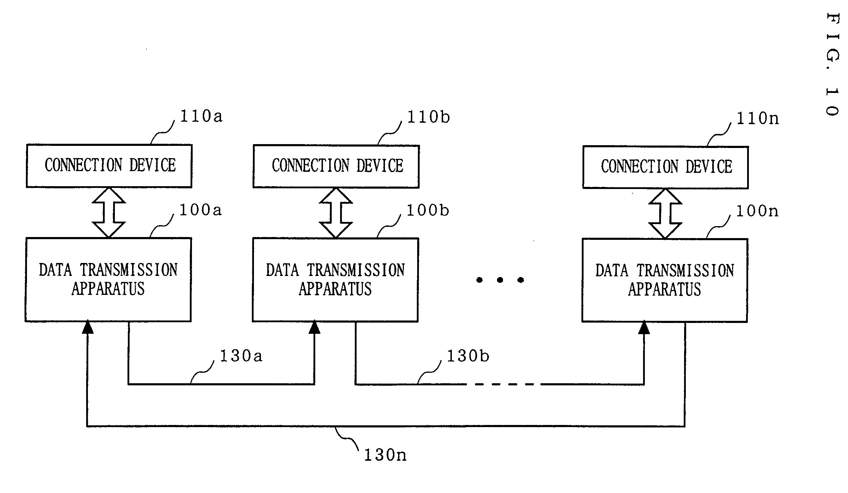

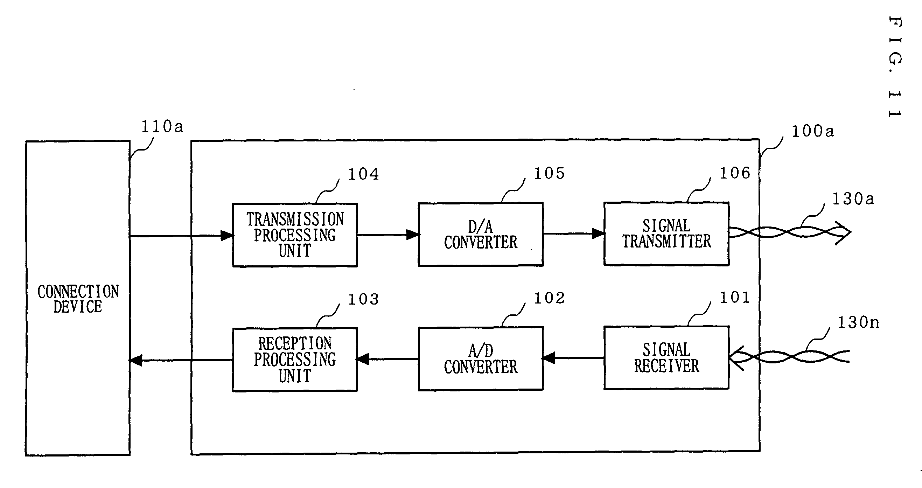

Recent years have seen intensive studies of networks in which a plurality of devices, such as audio devices, navigation devices, or information terminal devices, are connected to conduct high-speed communications of a large quantity of information, e.g. , digitized video and audio data, or computer data, between the devices. Especially in the field of automobiles, in-vehicle networks for performing digital data transmissions have been widely introduced. In the in-vehicle networks, for example, a ring topology is used as a physical topology, and a plurality of nodes are connected together in the ring topology to form a unidiretional ring-type LAN with the aim of unifying connections between devices. One example of a communication protocol for an information system used in the above-described ring-type LAN is MOST (Media Oriented Systems Transport). In the case of MOST, data transmissions over a MOST network is performed on a frame-by-frame basis such that frames are sequentially communicated from one node to another in one direction.
Incidentally, in the case of a ring-type LAN provided in an automobile, radiation noise may cause malfunctioning of other electronic devices mounted on the automobile. Also, there is a need to correctly transmit data without being affected by noise radiated from another device. Therefore, in conventional ring-type LANs using MOST, a MOST communication protocol is premised on optical communications, and nodes are connected with each other via optical-fiber cables in order to increase noise immunitywhile preventing the occurrence of electromagnetic waves. On the other hand, there is a technique which performs data communications by means of electrical signals via inexpensive cables, such as twisted pair cables or coaxial cables, and enables high-speed data transmissions exceeding 20 Mbps with reduced radiation noise and increased noise immunity. This technique is disclosed in, for example, International Publication WO02/30079 pamphlet.
Referring to FIGs. 10 and 11, a data transmission system using a ring-type network where nodes are connected with each other via inexpensive twisted pair cables is described. FIG. 10 is a block diagram illustrating a configuration of a conventional data transmission system using a ring-type network. FIG. 11 is a diagram illustrating a detailed structure of a data transmission apparatus 100a in FIG. 10.
In FIG. 10, the conventional data transmission system includes a plurality of stages of data transmission apparatuses 100a through 100n in which each node performs data transmission and data reception. The data transmission apparatuses 100a through 100n are connected in a ring form via transmission paths 130a through 130n composed of twisted pair cables. Also, connection devices 110a through 110n are connected to the data transmission apparatuses 100a through 100n, respectively, for exchanging reception data and transmission data. Note that, in a typical hardware configuration, the data transmission apparatuses 100a through 100n and their respective connection devices 110a through 110n are integrally configured
Since all the data transmission apparatuses 100a through 100n are the same in configuration, the configuration of the data transmission apparatus 100a is described as a representative example. In FIG. 11, the data transmission apparatus 100a includes a signal receiver 101, an A/D converter 102, a reception processing unit 103, a transmission processing unit 104, a D/A converter 105, and a signal transmitter 106.
The transmission processing unit 104 receives a digital data string from the connection device 110a. Then, the transmission processing unit 104 assigns symbols to the digital data string at intervals of a predetermined number of bits, and generates a digital signal having each symbol mapped to a predetermined signal level. The D/A converter 105 converts the digital signal generated in the transmission processing unit 104 to an analog signal. The signal transmitter 106 is typically a differential driver, which generates two analog signals of positive and negative polarities based on the analog signal obtained by conversion in the D/A converter 105, and outputs them to a data transmission apparatus 100b via the twisted pair cable 130a.
On the other hand, the signal receiver 101 is typically a differential receiver, which receives two analog signals of positive and negative polarities from the data transmission apparatus 100n via the twisted pair cable 130n, and reconstructs them into one analog signal by a differential operation. The A/D converter 102 converts the analog signal obtained by reconstruction in the signal receiver 101 to a digital signal having symbols each being represented by a predetermined signal level. The reception processing unit 103 generates a digital data string based on the digital signal obtained by conversion in the A/D converter 102 (inverse mapping). The generated digital data string is inputted to the connection device 110a.

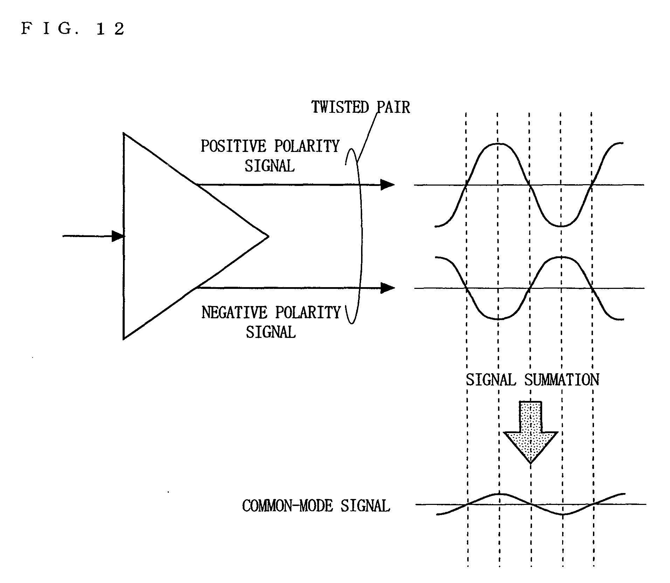

As is well-known, when differential transmissions are conducted through twisted pair cables, due to differences between signal amplitudes of paired lines, common-mode current flows to the ground, and a common-mode signal as illustrated in FIG. 12 appears. The common-mode signal causes the occurrence of radiation noise. Further, in the data transmission apparatus provided with both a reception function and a transmission function, a reception process and a transmission process are carried out by using the same clock so that crosstalk may occur between a reception common-mode signal from a twisted pair cable for receiving data and a transmission common-mode signal from a twisted pair cable for transmitting data, resulting in an increase of radiation noise.

Conventionally, techniques for constructing a network using twisted pair cables for data transmissions have been used in fields other than that of automobiles. Accordingly, there has been no special need to consider the effect of radiation noise due to crosstalk between the reception common-mode signal and the transmission common-mode signal. Therefore, in conventional data transmission systems, each data transmission apparatus is provided with no measures against the radiation noise due to crosstalk between a transmission path for reception and a transmission path for transmission.

However, in the case of using twisted pair cables to construct a network in an automobile for data transmissions, the effect of radiation noise due to crosstalk cannot be ignored. Accordingly, it is required to devise a new unprecedented technique to reduce the radiation noise due to crosstalk.

Therefore, an object of the present invention is to provide a data transmission apparatus and a data transmission method which enable reduction of radiation noise generated due to crosstalk between a reception route and a transmission route in the case of performing telecommunications via different transmission paths for transmission and reception, e.g., in the case of performing differential data transmissions using twisted pair cables.

DISCLOSURE OF THE INVENTION

The present invention is directed to a data transmission apparatus performing telecommunications with another apparatus via different transmission paths for transmission and reception. To achieve the above object, the data transmission apparatus of the present invention includes a receiver, a signal processing unit, a transmitter, and a phase control unit.

The receiver receives a signal transmitted from another apparatus via a transmission path for reception. The signal processing unit generates a transmission signal based on transmission data in synchronization with the reception signal received by the receiver. The transmitter transmits the transmission signal generated in the signal processing unit to another apparatus via a transmission path for transmission. The phase control unit adjusts a phase of the transmission signal to set a phase difference between the reception signal received by the receiver and the transmission signal to be transmitted by the transmitter to a predetermined value.

A typical phase control unit includes a phase detection unit for detecting a phase of the reception signal and a timing control unit for controlling timing for the signal processing unit to generate the transmission signal in accordance with a detection result of the phase detection unit. Furthermore, the phase control unit may further include a phase adjustment unit for adjusting the phase by delaying the transmission signal generated in the signal processing unit by a predetermined amount.

In the case where transmission paths are twisted pair cables, the phase control unit sets the predetermined value to a phase difference for reducing radiation noise due to crosstalk between a common-mode signal generated in a twisted pair cable for reception and a common-mode signal generated in a twisted pair cable for transmission. In this case, the predetermined value is preferably 90 degrees or 270 degrees.

Further, the present invention is directed to a data transmission method for carrying out telecommunications with another apparatus via different transmission paths for transmission and reception. The data transmission method includes a reception step of receiving a signal transmitted from another apparatus via a transmission path for reception, a generation step of generating a transmission signal based on transmission data in synchronization with the reception signal received in the reception step, a setting step of adjusting a phase of the transmission signal for setting a phase difference between the reception signal received in the reception step and the transmission signal generated in the generation step to a predetermined value, and a transmission step of transmitting the transmission signal whose phase adjusted in the setting step to another apparatus via a transmission path for transmission.

Further, the present invention is also directed to a semiconductor integrated circuit, in which a circuit for carrying out telecommunications with another apparatus via different transmission paths for transmission and reception is integrated on a semiconductor substrate. The semiconductor integrated circuit includes a reception circuit for receiving a signal transmitted from another apparatus via a transmission path for reception, a signal processing circuit for generating a transmission signal based on transmission data in synchronization with the reception signal received by the reception circuit, a transmission circuit for transmitting the transmission signal generated by the signal processing circuit to another apparatus via a transmission path for transmission, and a phase control circuit for adjusting a phase of the transmission signal to set a phase difference between the reception signal received by the reception circuit and the transmission signal to set a phase difference between the reception signal received by the reception circuit and the transmission signal to be transmitted by the transmission circuit to a predetermined value.

As such, in the present invention, the phase difference between a reception signal and a transmission signal is adjusted to a predetermined value. Therefore, by setting the predetermined value such that a canceling effect can be expected between a noise component contained in a transmission path for reception and a noise component contained in a transmission path for transmission, it becomes possible to reduce the radiation noise due to crosstalk between the transmission paths.

Further, the phase of a transmission signal is adjusted based on a phase obtained by detecting a reception signal, and therefore, the phase difference between the reception signal and the transmission signal can be constantly fixed at a predetermined value, regardless of the state of the transmission path for reception.

Further, by further including a phase adjustment unit capable of adjusting the phase difference between the reception signal and the transmission signal, variations in product quality which occurs due to differences of parts used in actual products, routing of a reception signal line and a transmission signal line, and so on can be accommodated.

Further, even in the case where a twisted pair cable is used for a transmission path, it is possible to reduce the radiation noise due to a common-mode signal caused by an amplitude difference between paired lines.

Furthermore, by adjusting the phase difference between the reception signal and the transmission signal to 90 degrees or 270 degrees, it becomes possible to comprehensively reduce the radiation noise regardless of the polarity of the common-mode signal.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a block diagram illustrating a structure of a data transmission apparatus 10 of an embodiment in the present invention.

FIG. 2 is a table used for explaining a mapping process performed by a transmission processing unit 16 in FIG. 1.

FIG. 3 is a graph illustrating an exemplary waveform of an analog signal outputted by a D/A converter 17 in FIG. 1.

FIG. 4 is a diagram illustrating exemplary common-mode signals generated in twisted pair cables.

FIG. 5 is a diagram illustrating exemplary common-mode signals generated in twisted pair cables.

FIG. 6 is a diagram showing relationships between signals in the data transmission apparatus 10 in FIG. 1.

FIG. 7 is a flowchart illustrating a procedure of a process that is performed by the data transmission apparatus 10 in FIG. 1 for adjusting a phase difference between a reception signal and a transmission signal.

FIG. 8 is a block diagram illustrating another structure of a data transmission apparatus 40 according to an embodiment of the present invention.

FIG. 9 is a diagram illustrating a detailed structure of the phase adjustment unit 41 in FIG. 8.

FIG. 10 is a block diagram illustrating a configuration of a conventional data transmission system using a ring-type network.

FIG. 11 is a diagram illustrating a detailed structure of a data transmission apparatus 100a in FIG. 10.

FIG. 12 is a diagram used for explaining a common-mode signal caused by an amplitude difference between paired lines of a twisted pair cable.

BEST MODE FOR CARRYING OUT THE INVENTION

A data transmission apparatus of the present embodiment can be used as a data transmission apparatus for constructing a system which employs electrical signals for performing data transmissions via a ring-type network such as MOST (refer to FIG. 10) . Further, the data transmission apparatus of the present embodiment can be used as a data transmission apparatus for constructing a system for performing data transmissions using electric signals, where a transmission path for transmission and a transmission path for reception are separate from each other.

Hereinafter, by taking an example of a data transmission apparatus for constructing a MOST-based data transmission system, a data transmission apparatus and a data transmission method, which are provided by the present invention, will be described.

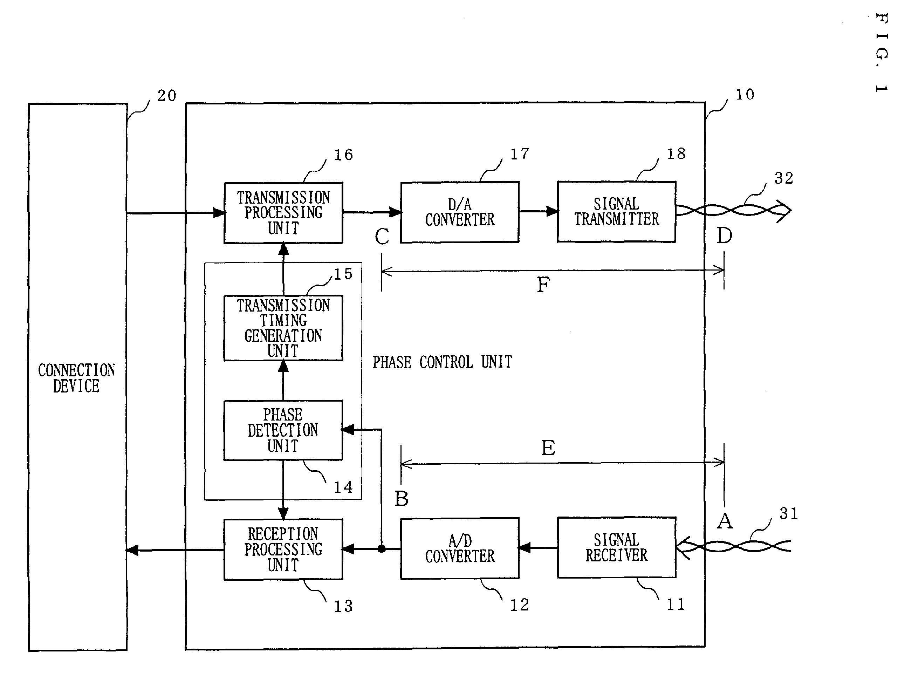

FIG. 1 is a block diagram illustrating a structure of a data transmission apparatus 10 according to an embodiment of the present invention. The data transmission apparatus 10 of the present embodiment is connected to a connection device 20 for exchanging reception data and transmission data, and also connected to another data transmission apparatus (not shown) via a twisted pair cable 31 for receiving data and a twisted pair cable 32 for transmitting data.

In FIG. 1, the data transmission apparatus 10 includes: a signal receiver 11 and an A/D converter 12, which constitute a receiver; a reception processing unit 13 and a transmission processing unit 16, which constitute a signal processing unit; a phase detection unit 14 and a transmission timing generation unit 15, which constitute a phase control unit; and a D/A converter 17 and a signal transmitter 18, which constitute a transmitter.

First, the outline of each element of the data transmission apparatus 10 is described.

The signal receiver 11 is typically a differential receiver, which receives two analog signals of positive and negative polarities fromanother data transmission apparatus via the twisted pair cable 31, and reconstructs them into one analog signal by a differential operation. The A/D converter 12 converts the analog signal obtained by reconstruction in the signal receiver 11 to a digital signal with a predetermined sampling frequency. The predetermined frequency is determined based on intervals between symbols used for mapping in the transmission processing unit 16, which will be described later. The reception processing unit 13 determines the digital signal obtained by conversion in the A/D converter 12, and generates a digital data string based on the determination. The generated digital data string is inputted to the connection device 20. The phase detection unit 14 detects the phase of the digital signal obtained by conversion in the A/D converter 12, and outputs the detection result, as a reception timing signal, to the transmission timing generation unit 15.

The transmission timing generation unit 15 controls timing for outputting a digital signal from the transmission processing unit 16 based on the reception timing signal supplied by the phase detection unit 14, such that a reception signal (point A) and a transmission signal (point D) are different in phase by a predetermined degree. The transmission processing unit 16 receives the digital data string from the connection device 20. Then, under the control of the transmission timing generation unit 15, the transmission processing unit 16 assigns symbols to the digital data string at intervals of a predetermined number of bits to generate a digital signal in which each symbol is mapped to a predetermined signal level. Although not particularly shown in the diagram, signal levels between the symbols are generally interpolated at predetermined intervals by using a shaping filter such as a digital filter. The D/A converter 17 converts the digital signal generated in the transmission processing unit 16 to an analog signal. The signal transmitter 18 is typically a differential driver, which generates two analog signals of positive and negative polarities from the analog signal obtained by conversion in the D/A converter 17, and outputs them to another data transmission apparatus through the twisted pair cable 32.

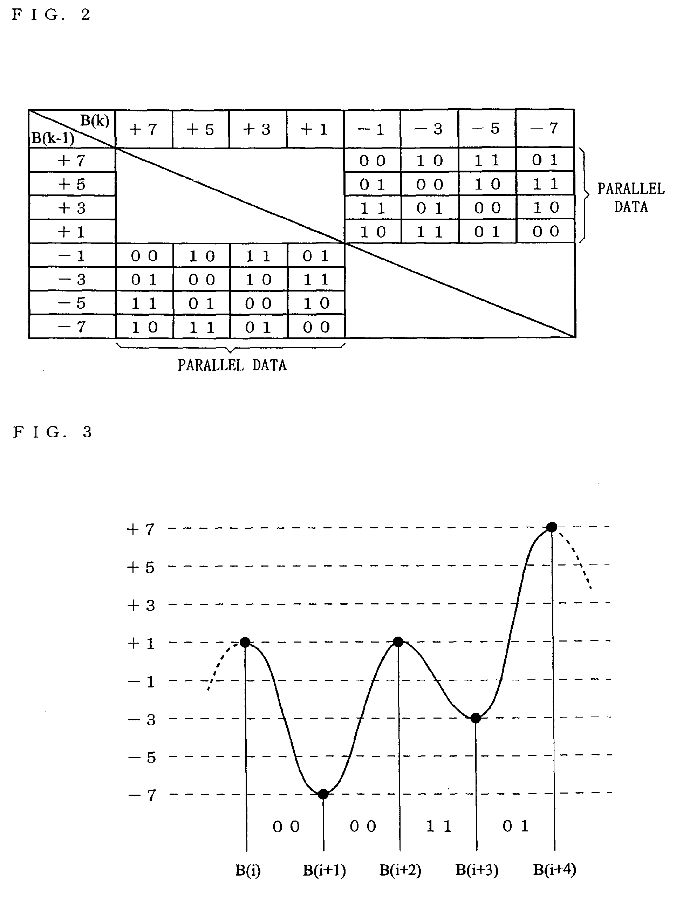

Here, an exemplary mapping process carried out by the transmission processing unit 16 is briefly described with reference to FIGs. 2 and 3. FIG. 2 is a table illustrating relationships among parallel data, symbol values B(k) to be mapped, and symbol values B(k-1) which are immediately before the symbol values B(k). FIG. 3 is a graph illustrating an exemplary waveform of an analog signal to which the D/A converter 17 converts a digital signal mapped in the transmission processing unit 16.

First, to the transmission processing unit 16, a digital data string is inputted in the form of 2-bit parallel data such as "00" or "01". The transmission processing unit 16 maps a symbol value B(k) of the obtained parallel data to one of eight values, i.e., +7, +5, +3, +1, -1, -3, -5, or -7, in accordance with the arrangement in FIG. 2 based on the relationship between a previous symbol value B(k-1) and the parallel data. A specific example of the mapping method will be described below.

For example, when the previous symbol value B(k-1) is -1 and the parallel data "00" is inputted to the transmission processing unit 16, the current symbol value B(k) is +7. When the previous symbol value B(k-1) is +5 and the parallel data "01" is inputted to the transmission processing unit 16, the current symbol value B(k) is -1. In this manner, a digital data string is mapped to alternating positive and negative symbol values. The symbol values alternately take positive and negative values in a manner as above, so that an analog signal as shown in FIG. 3 can be created.

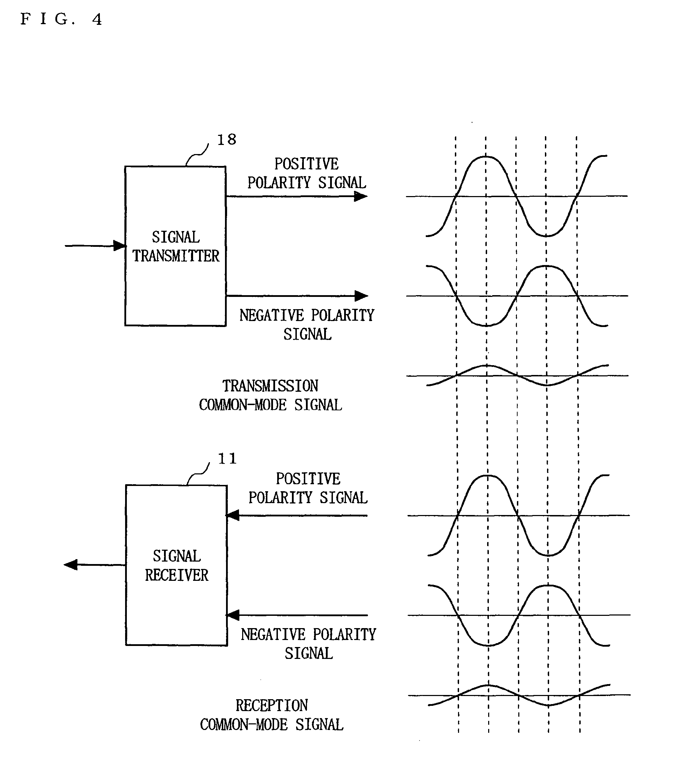

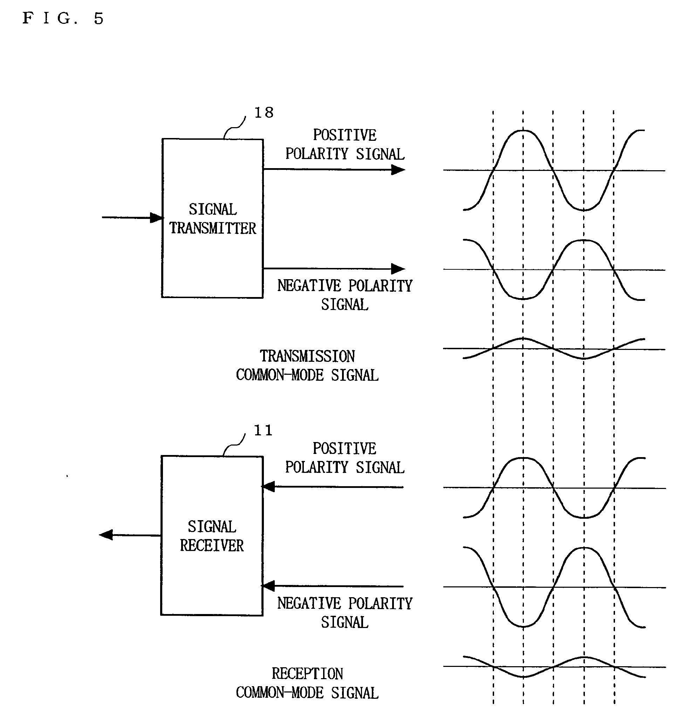

Next, a specific technique for allowing a reception signal (point A) and a transmission signal (point D) to be different in phase by a predetermined degree is described with reference to FIGs. 4 and 5. First, the predetermined phase difference is described. FIGs. 4 and 5 are diagrams illustrating examples of a common-mode signal generated in a twisted pair cable.

As described in the BACKGROUND ART unit, a common-mode signal, which causes radiation noise, occurs in a twisted pair cable due to the difference in amplitude between paired lines. When a dominant frequency component of the common-mode signal is the same or nearly the same on both the receiving side and transmitting side, the radiation noise increases due to crosstalk.

Therefore, in the present invention, a signal which is a sum of a reception common-mode signal and a transmission common-mode signal (hereinafter, referred to as a "summed common-mode signal") is diminished in order to reduce the radiation noise. The idea is as follows.

Consider a case where the polarity of large signal amplitude in the twisted pair cable 31 for reception is the same as the polarity of large signal amplitude in the twisted pair cable 32 for transmission (FIG. 4). In this case, a reception common-mode signal and a transmission common-mode signal are generated with the same polarity. Therefore, to minimize the summed common-mode signal (to cancel each other), a predetermined phase difference between the reception signal and the transmission signal may be set to 180 degrees.

Consider an opposite case where the polarity of large signal amplitude in the twisted pair cable 31 for reception is different from the polarity of large signal amplitude in the twisted pair cable 32 for transmission (FIG. 5). In this case, a reception common-mode signal and a transmission common-mode signal are opposite in polarity. Therefore, to minimize the summed common-mode signal (to cancel each other), the predetermined phase difference between the reception signal and the transmission signal may be set to 0 degrees.

As such, the predetermined phase difference for minimizing the summed common-mode signal varies depending on signal states in the twisted pair cables 31 and 32. Accordingly, if the predetermined phase difference is set to either 180 degrees or 0 degrees, the summed common-mode signal is adversely increased when the relationship between the polarities is unexpectedly changed to an undesirable state. Therefore, in the present invention, in order not to increase the summed common-mode signal, the predetermined phase difference is set to 90 degrees (or 270 degrees).

Note that if a noise signal contained in the reception signal and a noise signal contained in the transmission signal have invariable and fixed relationships in polarity and phase shift, the predetermined phase difference may be set based on the relationships.

Described next are points to be considered for ensuring the above-determined predetermined phase difference between the reception signal (point A) and the transmission signal (point D).

A delay time E from point A to point B as shown in FIG. 1 occurs between the signal receiver 11 receiving a reception signal and the phase detection unit 14 actually detecting the phase of the reception signal. Also, a delay time F from point C to point D as shown in FIG. 1 occurs between the transmission processing unit 16 outputting a transmission signal and the signal transmitter 18 actually outputting the transmission signal. Therefore, the phase detection unit 14 determines, in consideration of the delay time E + the delay time F, a phase difference x to be actually controlled by the following equation.

$$x = 90 \times (2a - 1) - \text{the delay time E} - \text{the delay time F}$$

(where a = an arbitrary positive integer, $x \geqq 0$)

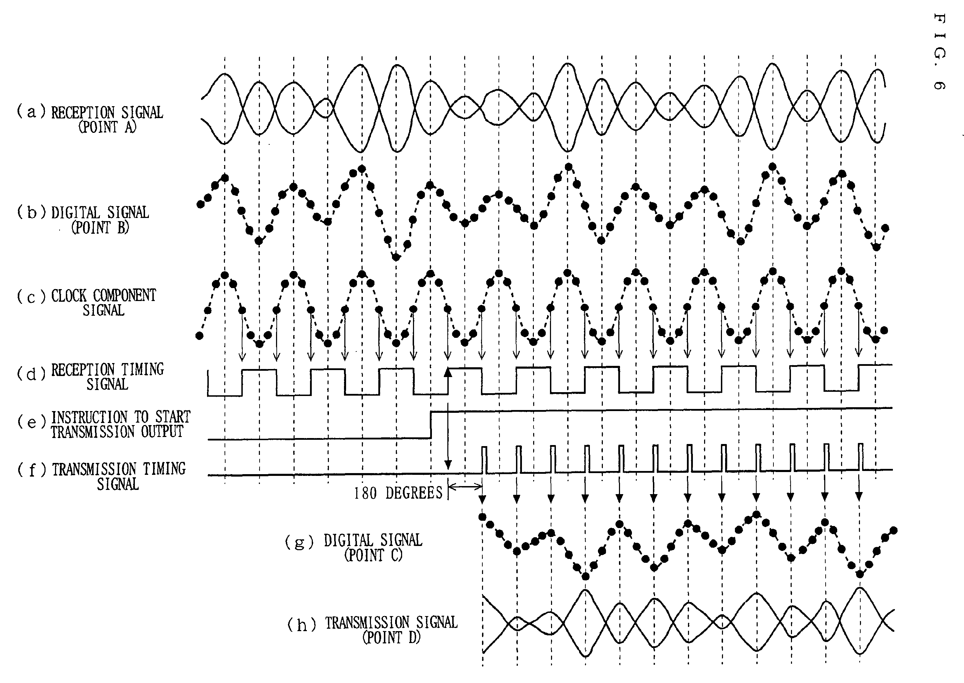

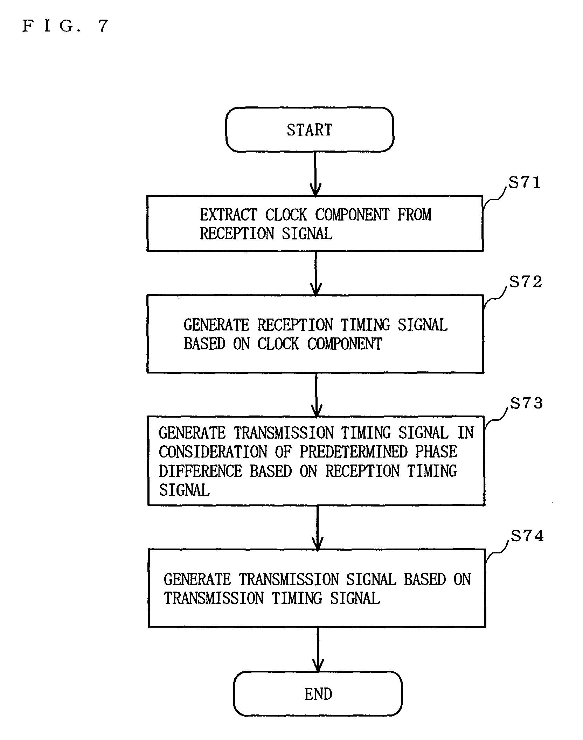

Next, a phase detection of a digital signal, which is carried out by the phase detection unit 14, and timing control, which is carried out by the transmission timing generation unit 15, will be described with reference to FIG. 6. FIG. 6 is a diagram showing relationships between signals in the data transmission apparatus 10. For the sake of simplification of description, FIG. 6 illustrates a case where the delay time E and the delay time F do not occur. FIG. 7 is a flowchart illustrating the procedure of a process that is performed by the data transmission apparatus 10 for adjusting a phase difference between a reception signal and a transmission signal.

The signal receiver 11 receives a reception signal (FIG. 6(a)). The reception signal is converted to a digital signal (FIG. 6(b)) through a differential process in the signal receiver 11 and a conversion process in the A/D converter 12. The phase detection unit 14 first extracts a clock component signal (FIG. 6(c)), excluding a data component, from the digital signal (stepS71). The extraction is readily performed by using a bandpass filter. Next, the phase detection unit 14 detects zero cross points of the extracted clock component signal, and generates clock pulses (FIG. 6(d)) which are inverted at the zero cross points (step S72). The clock pulses are passed, as a reception timing signal, from the phase detection unit 14 to the transmission timing generation unit 15.

The transmission timing generation unit 15 receives the reception timing signal from the phase detection unit 14, and generates, based on an instruction to start transmission output (FIG. 6(e)) provided separately, a transmission timing signal as follows (step S73). The instruction to start transmission output is issued at the time when a clock of the present data transmission apparatus 10 is reproduced by a clock reproduction processing unit, which is not shown, based on a clock of another data transmission apparatus having transmitted the reception signal, i.e. , at the time when an initialization operation for performing a data transmission process is completed.

Upon receipt of the instruction to start transmission output, the transmission timing generation unit 15 detects timing when the reception timing signal is first inverted, namely, the first zero cross point of the above-described clock component signal (the arrow in FIG. 6(d)). Then, the transmission timing generation unit 15 generates a transmission timing signal (FIG. 6(f)), which provides timing for mapping first at a point in time corresponding to a delay from the detected timing by the above phase difference x to be actually controlled, and thereafter, at intervals between symbols. In the example in FIG. 6, the phase difference between the detected timing and the transmission timing signal is set at the sum of the phase difference of 90 degrees from a symbol position to a zero cross point and the 90-degree phase difference that is to be actually controlled (= 180 degrees). Note that the transmission timing signal is not required to be a trigger pulse signal as illustrated in FIG. 6(f). For example, a counter which counts up from the detected timing by predetermined increments may be used, such that the transmission processing unit 16 executes a process only at the time of a prescribed count value.

The transmission processing unit 16 generates a digital signal (FIG. 6(g)) by mapping the digital data string inputted from the connection device 20 on a symbol basis in accordance with the transmission timing signal provided from the transmission timing generation unit 15 (step S74). The generated digital signal is converted to an analog signal (FIG. 6(h)) by a conversion process in the D/A converter 17, and forwarded, as a transmission signal, from the signal transmitter 18 to another data transmission apparatus.

With this process, the phase difference between the reception signal (FIG. 6(a)) and the transmission signal (FIG. 6(h)) is set at 90 degrees (or 270 degrees).

In the logic of design, the phase difference between a reception signal and a transmission signal can be maintained at a desired value, i.e., 90 degrees (or 270 degrees) by the phase detection unit 14 and the transmission timing generation unit 15. However, in reality, in the case where the data transmission apparatus of the present invention is manufactured by various manufacturers, variations in product quality occur due to differences of parts used, routing of a reception signal line and a transmission signal line, and so on. Accordingly, with only the phase difference uniquely adjusted by the phase detection unit 14 and the transmission timing generation unit 15, the phase difference between a reception signal and a transmission signal may not be maintained at a desired value.

Therefore, in another embodiment as described below, a reception signal is actually inputted to a manufactured data transmission apparatus, which is caused to output a transmission signal to make fine adjustments to the phase difference so as to accommodate the variations in product quality.

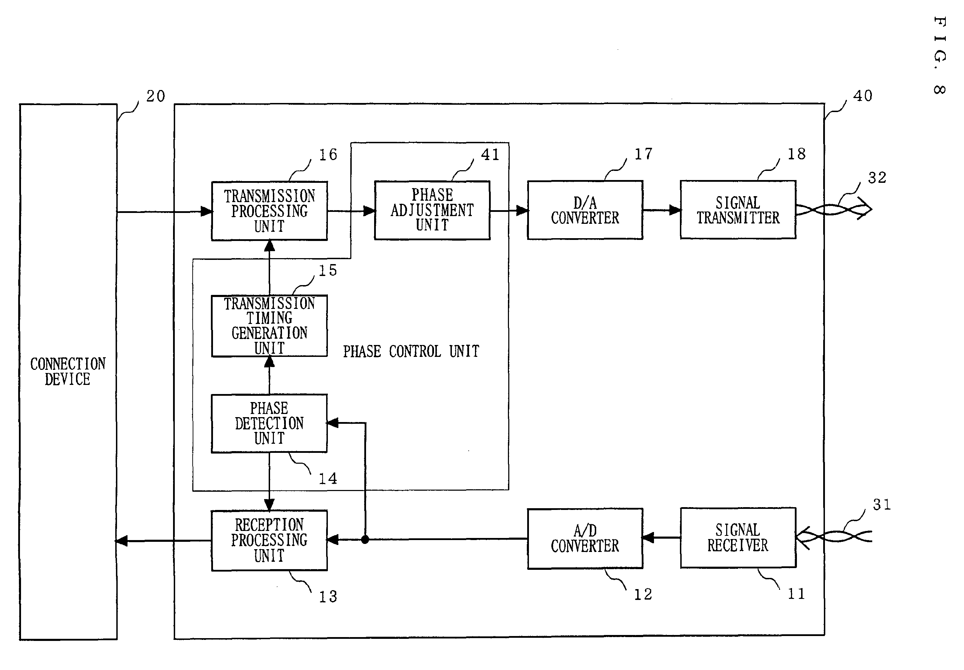

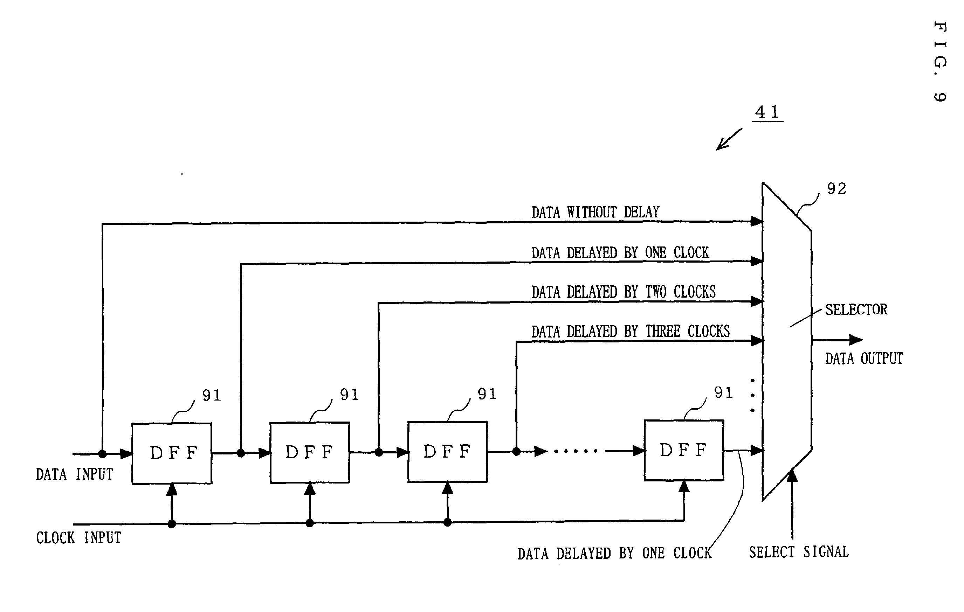

FIG. 8 is a block diagram illustrating a structure of a data transmission apparatus 40 according to another embodiment of the present invention. As is apparent from FIG. 8, the data transmission apparatus 40 according to this embodiment has a structure in which a phase adjustment unit 41 is additionally provided in the phase control unit of the above-described data transmission apparatus 10. FIG. 9 is a diagram illustrating a detailed structure of the phase adjustment unit 41 in FIG. 8.

As shown in FIG. 9, the phase adjustment unit 41 includes: a shift register configured by a plurality of D flip-flops (DFFs) 91 connected in series; and a selector 92. To the first D flip-flop 91, data of a digital signal outputted from the transmission processing unit 16 is inputted. Each D flip-flop 91 operates with a clock of a predetermined frequency, and delays inputted data by one clock before outputting it. The frequency of the clock and the number of D flip-flops 91 can be freely set according to a desired accuracy or extent of phase adjustments. The selector 92 receives data outputted from each of the D flip-flops 91 and data bypassing the D flip-flops 91, and selectively outputs any one data in accordance with a select signal provided by, for example, an operator adjusting the data transmission apparatus 40.

With this configuration, it is possible to achieve delays of input data with precision in units of one clock. Therefore, for example, in the case where an actually-measured phase difference of a transmission signal with respect to a reception signal is two clocks ahead from 90 degrees, a select signal for selecting output data from the second D flip-flop 91 as an output is provided from the operator to the selector 92.

The above embodiment has been described with respect to an example in which the phase adjustment unit 41 shown in FIG. 9, which employs digital processing, is inserted between the transmission processing unit 16 and the D/A converter 17 in order to adjust phases of a reception signal and a transmission signal. However, the phase adjustments are not necessarily carried out by digital processing, and may be carried out by analog processing. In such a case, a phase adjustment unit including an analog circuit in accordance with the details of processing is inserted between the D/A converter 17 and the signal transmitter 18 or into an output stage of the signal transmitter 18. Further, the phase adjustments may be carried out on the side of processing a transmission signal, rather than on the side of processing a reception signal. In this case, a phase adjustment unit including a digital or analog circuit in accordance with the details of processing is inserted between an input stage of the signal receiver 11 and an input stage of the phase detection unit 14.

As described above, a data transmission apparatus and method according to an embodiment of the present invention adjusts the phase difference between a reception signal and a transmission signal to a predetermined value. Therefore, by setting the predetermined value such that a canceling effect can be expected between a noise component contained in a transmission path for reception and a noise component contained in a transmission path for transmission , it becomes possible to reduce radiation noise due to crosstalk between the transmission paths. Further, the phase of a transmissionsignal is adjusted based on a phase obtained by detecting a reception signal, and therefore, the phase difference between the reception signal and the transmission signal can be constantly fixed at a predetermined value, regardless of the state of the transmission path for reception. Particularly when a twisted pair cable is used for the transmission path, it is possible to reduce radiation noise due to a common-mode signal caused by an amplitude difference between paired lines. Further, in this case, by setting the predetermined value to 90 degrees or 270 degrees, it becomes possible to prevent the occurrence of a summed common-mode signal of a high level, regardless of the polarity of the common-mode signal. Thus, radiation noise presented to devices can be comprehensively reduced.

Although the above embodiment has been described with respect to a case where the twisted pair cables 31 and 32 are used for transmission paths, this is not restrictive. The present invention is applicable to any system as long as the system handles transmission signals containing a noise component having a frequency which is the same or nearly the same on both the receiving side and the transmitting side.

Also, the above embodiment has been described with respect to an exemplary case where the data transmission apparatus 10 (or 40) for constructing a system which uses electrical signals to perform data transmissions via MOST. However, it is also applicable to a system which uses analog electrical signals for all processing from signal reception by the signal receiver 11 to signal transmission by the signal transmitter 18. In this case, the A/D converter 12 and the D/A converter 17 are not required.

Typically, a data transmission apparatus according to the present embodiment is implemented and commercialized in the form of a semiconductor integrated circuit in which the above-described functions are each realized by a circuit integrated on a semiconductor substrate.

While the invention has been described in detail, the foregoing description is in all aspects illustrative and not restrictive. It is understood that numerous other modifications and variations can be devised without departing from the scope of the invention.

INDUSTRIAL APPLICABILITY

A data transmission apparatus and method according to the present invention can be used in the case of carrying out telecommunications with another apparatus via different transmission paths for transmission and reception, for example, and is useful particularly in the case of reducing radiation noise generated due to crosstalk between a reception route and a transmission route, for example.

**Claims**

1. A data transmission apparatus carrying out telecommunications with another apparatus via different transmission paths for transmission and reception, the apparatus comprising:

   a receiver for receiving a signal transmitted from another apparatus via a transmission path for reception;
   a signal processing unit for generating a transmission signal based on transmission data in synchronization with the reception signal received by the receiver;
   a transmitter for transmitting the transmission signal generated in the signal processing unit to another apparatus via a transmission path for transmission; and
   a phase control unit for adjusting a phase of the transmission signal to set a phase difference between the reception signal received by the receiver and the transmission signal to be transmitted by the transmitter to a predetermined value.

2. The data transmission apparatus according to claim 1, wherein the phase control unit includes:

   a phase detection unit for detecting a phase of the reception signal; and
   a timing control unit for controlling timing for the signal processing unit to generate the transmission signal in accordance with a detection result of the phase detection unit.

3. The data transmission apparatus according to claim 2, wherein
   the phase control unit further includes a phase adjustment unit for adjusting the phase by delaying the transmission signal generated in the signal processing unit by a predetermined amount.

4. The data transmission apparatus according to claim 1, wherein
   the transmission paths are twisted pair cables, and
   the phase control unit sets the predetermined value to a phase difference for reducing radiation noise due to crosstalk between a common-mode signal generated in a twisted pair cable for reception and a common-mode signal generated in a twisted pair cable for transmission.

5. The data transmission apparatus according to claim 4, wherein
   the predetermined value is 90 degrees or 270 degrees.

6. A data transmission method for carrying out telecommunications with another apparatus via different transmission paths for transmission and reception, the method comprising:

   a reception step of receiving a signal transmitted from another apparatus via a transmission path for reception,
   a generation step of generating a transmission signal based on transmission data in synchronization with the reception signal received in the reception step,
   a setting step of adjusting a phase of the transmission signal for setting a phase difference between the reception signal received in the reception step and the transmission signal generated in the generation step to a predetermined value, and

a transmission step of transmitting the transmission signal whose phase adjusted in the setting step to another apparatus via a transmission path for transmission.

7. A semiconductor integrated circuit, in which a circuit for carrying out telecommunications with another apparatus via different transmission paths for transmission and reception is integrated on a semiconductor substrate, the semiconductor integrated circuit comprising:

a reception circuit for receiving a signal transmitted from another apparatus via a transmission path for reception;

a signal processing circuit for generating a transmission signal based on transmission data in synchronization with the reception signal received by the reception circuit;

a transmission circuit for transmitting the transmission signal generated by the signal processing circuit to another apparatus via a transmission path for transmission; and

a phase control circuit for adjusting a phase of the transmission signal to set a phase difference between the reception signal received by the reception circuit and the transmission signal to be transmitted by the transmission circuit to a predetermined value.

FIG. 1

F I G. 2

| B(k-1) \ B(k) | +7 | +5 | +3 | +1 | −1 | −3 | −5 | −7 |
|---|---|---|---|---|---|---|---|---|
| +7 | | | | | 0 0 | 1 0 | 1 1 | 0 1 |
| +5 | | | | | 0 1 | 0 0 | 1 0 | 1 1 |
| +3 | | | | | 1 1 | 0 1 | 0 0 | 1 0 |
| +1 | | | | | 1 0 | 1 1 | 0 1 | 0 0 |
| −1 | 0 0 | 1 0 | 1 1 | 0 1 | | | | |
| −3 | 0 1 | 0 0 | 1 0 | 1 1 | | | | |
| −5 | 1 1 | 0 1 | 0 0 | 1 0 | | | | |
| −7 | 1 0 | 1 1 | 0 1 | 0 0 | | | | |

PARALLEL DATA (right)

PARALLEL DATA (bottom)

F I G. 3

B(i)    B(i+1)    B(i+2)    B(i+3)    B(i+4)

0 0    0 0    1 1    0 1

11

FIG. 4

SIGNAL
TRANSMITTER

18

POSITIVE
POLARITY SIGNAL

NEGATIVE POLARITY
SIGNAL

TRANSMISSION
COMMON-MODE SIGNAL

SIGNAL
RECEIVER

11

POSITIVE
POLARITY SIGNAL

NEGATIVE POLARITY
SIGNAL

RECEPTION
COMMON-MODE SIGNAL

FIG. 5

SIGNAL
TRANSMITTER

18

POSITIVE
POLARITY SIGNAL

NEGATIVE POLARITY
SIGNAL

TRANSMISSION
COMMON-MODE SIGNAL

SIGNAL
RECEIVER

11

POSITIVE
POLARITY SIGNAL

NEGATIVE POLARITY
SIGNAL

RECEPTION
COMMON-MODE SIGNAL

FIG. 6

(a) RECEPTION SIGNAL
(POINT A)

(b) DIGITAL SIGNAL
(POINT B)

(c) CLOCK COMPONENT
SIGNAL

(d) RECEPTION TIMING
SIGNAL

(e) INSTRUCTION TO START
TRANSMISSION OUTPUT

(f) TRANSMISSION TIMING
SIGNAL

180 DEGREES

(g) DIGITAL SIGNAL
(POINT C)

(h) TRANSMISSION SIGNAL
(POINT D)

F I G. 7

```
          ┌─────────────────┐
          │      START       │
          └─────────────────┘
                   │
                   ▼                            S71
   ┌──────────────────────────────────┐
   │  EXTRACT CLOCK COMPONENT FROM     │
   │  RECEPTION SIGNAL                 │
   └──────────────────────────────────┘
                   │
                   ▼                            S72
   ┌──────────────────────────────────┐
   │  GENERATE RECEPTION TIMING SIGNAL │
   │  BASED ON CLOCK COMPONENT         │
   └──────────────────────────────────┘
                   │
                   ▼                            S73
   ┌──────────────────────────────────┐
   │  GENERATE TRANSMISSION TIMING SIGNAL IN │
   │  CONSIDERATION OF PREDETERMINED PHASE   │
   │  DIFFERENCE BASED ON RECEPTION TIMING   │
   │  SIGNAL                            │
   └──────────────────────────────────┘
                   │
                   ▼                            S74
   ┌──────────────────────────────────┐
   │  GENERATE TRANSMISSION SIGNAL BASED ON  │
   │  TRANSMISSION TIMING SIGNAL       │
   └──────────────────────────────────┘
                   │
                   ▼
          ┌─────────────────┐
          │       END        │
          └─────────────────┘
```

F I G. 8

F I G. 9

41

92

SELECTOR

DATA OUTPUT

SELECT SIGNAL

DATA WITHOUT DELAY

DATA DELAYED BY ONE CLOCK

DATA DELAYED BY TWO CLOCKS

DATA DELAYED BY THREE CLOCKS

DATA DELAYED BY ONE CLOCK

91 DFF

91 DFF

91 DFF

91 DFF

DATA INPUT

CLOCK INPUT

FIG. 10

FIG. 11

EP 1 631 029 A1

FIG. 12

TWISTED PAIR

POSITIVE POLARITY
SIGNAL

NEGATIVE POLARITY
SIGNAL

SIGNAL SUMMATION

COMMON-MODE SIGNAL

<div align="center">

**INTERNATIONAL SEARCH REPORT**

</div>

| | International application No. |
|---|---|
| | PCT/JP2004/001375 |

| A. CLASSIFICATION OF SUBJECT MATTER |
|---|
| Int.Cl⁷ H04L25/49, H04L7/00 |

According to International Patent Classification (IPC) or to both national classification and IPC

| B. FIELDS SEARCHED |
|---|
| Minimum documentation searched (classification system followed by classification symbols)<br> Int.Cl⁷ H04L25/49, H04L7/00 |

Documentation searched other than minimum documentation to the extent that such documents are included in the fields searched

| Jitsuyo Shinan Koho | 1926–1996 | Jitsuyo Shinan Toroku Koho | 1996–2004 |
| Kokai Jitsuyo Shinan Koho | 1971–2004 | Toroku Jitsuyo Shinan Koho | 1994–2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 8-256138 A (Sharp Corp.),<br>01 October, 1996 (01.10.96), | 1,2,6,7 |
| A | Fig. 1 and explanations thereof<br>(Family: none) | 3-5 |
| Y | JP 60-59894 A (Nippon Telegraph & Telephone Public Corp.), | 1,2,6,7 |
| A | 06 April, 1985 (06.04.85),<br>Page 1, lower left column, lines 12 to 18<br>(Family: none) | 3-5 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 February, 2004 (27.02.04) | 16 March, 2004 (16.03.04) |

| Name and mailing address of the ISA/<br> Japanese Patent Office | Authorized officer |
|---|---|
| Facsimile No. | Telephone No. |

Form PCT/ISA/210 (second sheet) (July 1998)